# EUROPEAN PATENT SPECIFICATION

(11) **EP 2 735 465 B1**
(45) Date of publication and mention of the grant of the patent: **29.07.2015**
(21) Application number: 13192508.3
(22) Date of filing: 12.11.2013
(51) Int. Cl.: B60Q 1/00, B60K 35/00, B60K 37/02, G01D 13/04

(54) **Reconfigurable instrument cluster assembly with a mechanical pointer overlying a mirror**
Rekonfigurierbare Instrumentenclusteranordnung mit mechanischem Zeiger über einem Spiegel liegend
Groupe d'instruments reconfigurables avec un pointeur mécanique recouvrant un miroir

(30) Priority: 26.11.2012 US 201213685097
(43) Date of publication of application: 28.05.2014
(73) Proprietor: Delphi Technologies, Inc., Troy MI 48007 (US)
(72) Inventor: Blackmer, Stephen C., Millington, MI Michigan 48746 (US)
(74) Representative: Delphi France SAS

(56) References cited:
- DE-A1- 10 154 227
- US-A- 5 270 682

## Description

### TECHNICAL FIELD OF INVENTION

This disclosure generally relates to an instrument cluster assembly or display assembly suitable for vehicle installation, and more particularly relates to an assembly that includes a mirror with an overlying pointer to superimpose the pointer onto an image from a reconfigurable display.

### BACKGROUND OF INVENTION

Traditional vehicle instrument panel needle indicators or gauge pointers that are positioned or rotated about an axis are known. Such traditional needle indicators are typically rotated by a permanent magnet attached to a shaft that is coupled to the pointer and located at the axis. The permanent magnet is typically urged to some angle by an electromagnet.

Reconfigurable instrument panels that use flat display technology such as arrays of light emitting diodes (i.e. LED display) or liquid crystal devices (i.e. LCD display) have been introduced. However, the appearance of such flat, two-dimensional displays are not aesthetically pleasing to some customers as the traditional needle indicator type displays. It has been proposed that the reconfigurable display be overlaid with a needle indicator. However, the permanent magnet and electromagnet undesirably obstruct too much of the reconfigurable display proximate to the axis. It has also been proposed that the permanent magnet and electromagnet be located behind the reconfigurable display, and the shaft extended through the reconfigurable display. However, this requires providing a hole through the reconfigurable display that makes manufacturing of the reconfigurable display undesirable complicated and costly. From genetic DE10154227A1 it is known to use an instrument cluster assembly with a mirror oriented to reflect an image in combination with a pointer.

### SUMMARY OF THE INVENTION

In accordance with one embodiment, an instrument cluster assembly suitable for installation into a vehicle to display information to an operator of the vehicle is provided. The assembly includes a reconfigurable display, a mirror, and a pointer. The reconfigurable display is configured to display an image. The mirror is oriented to reflect the image toward the operator. The pointer is movably overlying the mirror such that the pointer is effective to indicate a feature of the image to the operator.

Additionally, the pointer is mounted on a rotatable shaft passing through a hole in the mirror such that rotation of the shaft is effective to orient the pointer.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a perspective view of a vehicle interior equipped with an instrument cluster assembly in accordance with one embodiment; and
Fig. 2 is a cut-away perspective view of the instrument cluster assembly of Fig. 1 in accordance with one embodiment.

### DETAILED DESCRIPTION

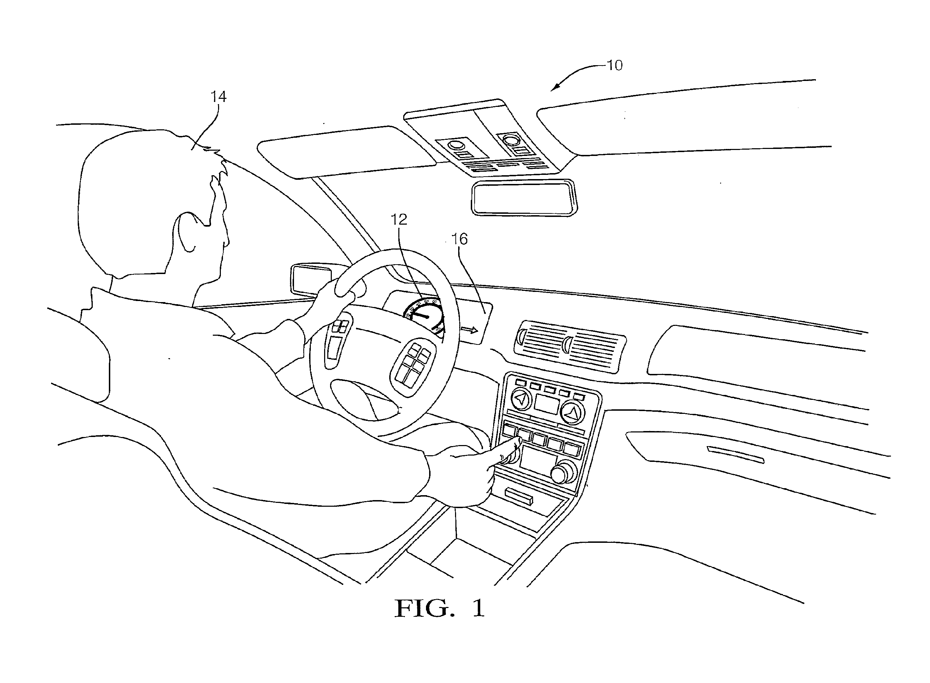

Fig. 1 illustrates a non-limiting example of a vehicle 10 equipped with an instrument cluster assembly, hereafter the assembly 12, installed into a dashboard 16 of the vehicle 10. In general, the assembly 12 displays information to an operator 14 of the vehicle 10 such as vehicle speed, engine coolant temperature, and the like.

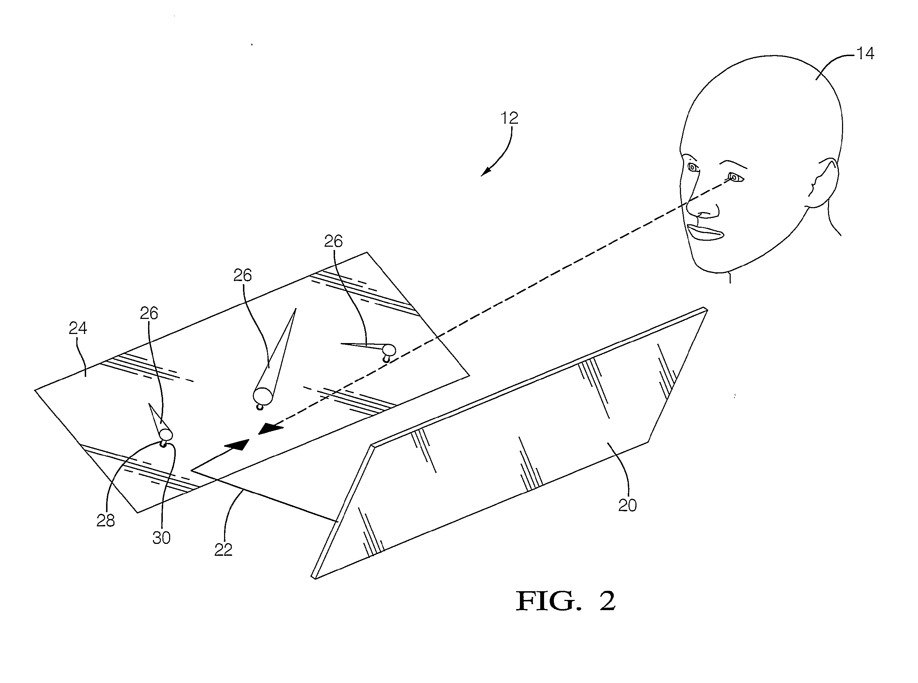

Fig. 2 illustrates a non-limiting example of some of the parts of the assembly 12. Some features normally found in such assemblies are not illustrated only to simplify the explanation. Those in the art will recognize that other parts such as a housing, circuit board assembly, transparent cover, fasteners, and the like are necessary to form an instrument cluster assembly suitable for installation into a vehicle.

The assembly includes a reconfigurable display, hereafter the display 20. The display may be a liquid crystal device (LCD) type display, or an organic light emitting diode (OLED) type display, or any other type of display that can display an image, illustrated herein as an arrow indicating the direction an image is projected by the display 20, and hereafter referred to as the image 22. For example, the image 22 may be an arrangement of numbers or indicia that may correspond to vehicle speed, engine speed, vehicle fuel level, engine coolant temperature, or symbols that may be variably illuminated to indicate a condition such as to indicate that a turn signal indicator of the vehicle 10 is activated. Having a reconfigurable display as part of the assembly is advantageous as what information is displayed can be changed readily. For example, the operator 14 may select from several configurations of information by pressing a button as suggested in Fig. 1.

In order to fulfill an aesthetic desire that the assembly 12 have a movable or mechanical pointer overlying the image 22, but avoid the undesirable complexities of providing a hole in the display 20, the assembly 12 includes a mirror 24 oriented to reflect the image 22 toward the operator 14. The mirror 24 may be formed of glass with a reflective coating on one side, as is well known, or a metalized coating overlying a polymeric substrate, as is also well known.

To provide the effect of a mechanical pointer or needle, the assembly 12 includes a pointer 26 movably overlying the mirror 24 such that the pointer 26 is effective to indicate a feature of the image 22 to the operator 14. For example, the image 22 may include an arrangement of numbers suitable for indicating vehicle speed, and the pointer 26 may be oriented to point to one of the numbers to indicate the present speed of the vehicle 10.

By way of further example, the assembly 12 may include a plurality of pointers, and the image 22 may be configured to include indicia for fuel level (e.g. 'E' for empty, '½' for half full, and 'F' for full) that align with the left of the three pointers illustrated. Similarly, the image 22 may include indicia for engine coolant temperature (e.g. 'C' for cold, H for hot, or numbers corresponding to potential coolant temperatures) that align with the right of the three pointers.

To orient the pointer 26, the pointer may be mounted on a rotatable shaft 28 passing through a hole 30 in the mirror 24 such that rotation of the shaft 28 is effective to orient the pointer 26. It should be appreciated that the illustration shows the shaft 28 and hole 30 to simplify the explanation, and it is contemplated that the size of the hole 30 and the length of the shaft 28 would be such that they were not normally visible to the operator 14.

In order to orient the pointer 26, the assembly 12 may include a motor (not shown) coupled to the shaft 28 in a manner effective to rotate or orient the pointer 26. By way of example and not limitation, the motor may be a brushless direct current (DC) motor, or a brushless stepper motor, or other device suitable to rotate and control the position of the pointer 26. Such types of motors are commercially available, well known in the instrument cluster arts, and the means to control the position of the motor so that the shaft 28 can be rotated to a particular orientation and thereby control the orientation of the pointer 26 is well known in the art.

Accordingly, an instrument cluster assembly (the assembly 12) is provided. The assembly 12 includes a mirror 24 equipped with a pointer 26 that can be oriented to indicate a feature of an image 22 on a display 20. The display 20 is reconfigurable so that, for example, numbers in the image 22 can be changed from corresponding to vehicle speed to corresponding to engine speed, and so the pointer 26 can alternatively serve as a speedometer or a tachometer.

## Claims

1. An instrument cluster assembly (12) suitable for installation into a vehicle (10) to display information to an operator (14) of the vehicle (10), said assembly (12) comprising:
a reconfigurable display (20) configured to display an image (22);
a mirror (24) oriented to reflect the image (22) toward the operator (14); and
a pointer (26) movably overlying the mirror (24) such that the pointer (26) is effective to indicate a feature of the image (22) to the operator (14),
**characterized in that** the pointer (26) is mounted on a rotatable shaft (28) passing through a hole (30) in the mirror (24) such that rotation of the shaft (28) is effective to orient the pointer (26).

2. The assembly (12) in accordance with claim 1, wherein the display (20) comprises a liquid crystal device.

## Patentansprüche

1. Eine Instrumentengruppebaugruppe (12), die geeignet ist zur Installation in einem Fahrzeug (10), um Information für einen Bediener (14) des Fahrzeugs (10) anzuzeigen, wobei die Baugruppe (12) aufweist:
eine rekonfigurierbare Anzeige (20), die konfiguriert ist zum Anzeigen eines Bilds (22);
einen Spiegel (24), der ausgerichtet ist zum Reflektieren des Bilds (22) in Richtung des Bedieners (14); und
einen Zeiger (26), der bewegbar über dem Spiegel (24) liegt derart, dass der Zeiger (26) wirksam ist, ein Merkmal des Bilds (22) dem Bediener (14) anzuzeigen,
**dadurch gekennzeichnet, dass** der Zeiger an einem rotierbaren Schaft (28) angebracht ist, der durch ein Loch (30) in dem Spiegel (24) geht derart, dass die Rotation des Schafts (28) wirksam ist, um den Zeiger (26) auszurichten.

2. Die Baugruppe (12) gemäß Anspruch 1, wobei die Anzeige (20) eine Flüssigkristallvorrichtung aufweist.

## Revendications

1. Assemblage de regroupement d'instruments (12) approprié pour l'installation dans un véhicule (10) afin d'afficher des informations pour un opérateur (14) du véhicule (10), ledit assemblage (12) comprenant :
un affichage reconfigurable (20) configuré pour afficher une image (22) ; un miroir (24) orienté pour réfléchir l'image (22) vers l'opérateur (14) ; et
un pointeur (26) mobile en surimpression sur le miroir (24) de telle sorte que le pointeur (26) a pour effet d'indiquer une caractéristique de l'image (22) à l'opérateur (14),
**caractérisé en ce que** le pointeur (26) est monté sur un arbre rotatif (28) passant à travers un trou (30) dans le miroir (24) de telle façon qu'une rotation de l'arbre (28) a pour effet d'orienter le pointeur (26).

2. Assemblage (12) selon la revendication 1, dans lequel l'affichage (20) comprend un dispositif à cristaux liquides.
